Europäisches Patentamt

European Patent Office

Office européen des brevets

(19)

(11) Veröffentlichungsnummer: **0 276 337**
B1

(12) # EUROPÄISCHE PATENTSCHRIFT

(45) Veröffentlichungstag der Patentschrift:
29.11.89

(51) Int. Cl.⁴: **H04N 1/028**, G02B 5/00

(21) Anmeldenummer: 87100998.1

(22) Anmeldetag: 24.01.87

(54) **Blendenanordnung zur optoelektronischen Abtastung von Vorlagen.**

(43) Veröffentlichungstag der Anmeldung:
03.08.88 Patentblatt 88/31

(45) Bekanntmachung des Hinweises auf die Patenterteilung:
29.11.89 Patentblatt 89/48

(84) Benannte Vertragsstaaten:
DE FR GB

(56) Entgegenhaltungen:
EP-A- 0 077 410
DE-A- 2 113 966
DE-B- 2 805 237
DE-C- 615 177
US-A- 2 691 696

PATENT ABSTRACTS OF JAPAN, Band 3,
Nr. 77 (E-120), 30. Juni 1979, Seite 107 E 120; & JP - A
- 54 054 651 (FUJITSU) 01.05.1979

(73) Patentinhaber: **Dr.-Ing. Rudolf Hell GmbH,
Grenzstrasse 1-5, D-2300 Kiel 14(DE)**

(72) Erfinder: **Knop, Hans-Georg, Stückenberg 15,
D-2305 Heikendorf(DE)**
Erfinder: **Schulz-Hennig, Jörg, Gartenweg 7,
D-2305 Heikendorf(DE)**

**Beschreibung**

Die vorliegende Erfindung betrifft eine Blendenanordnung zur optoelektronischen Abtastung von Vorlagen gemäß dem Oberbegriff des Anspruchs 1.

Bei der optoelektronischen Vorlagenabtastung, wie sie z. B. in der Reproduktionstechnik bei den sogenannten Scannern zur Anwendung kommt, wird eine Vorlage punkt- und zeilenweise, sei es in Aufsicht oder in Durchsicht, abgetastet. Der Abtastlichtstrahl wird über eine Blendenanordnung auf einen oder mehrere optoelektronische Wandler gegeben, an deren Ausgang die Bildsignale in analoger Form erscheinen. Solche Scanner werden in der Reproduktion zur Abtastung von Schwarzweißvorlagen oder von farbigen Vorlagen verwendet, wobei bei der Farbreproduktion entweder Farbauszüge für den Mehrfarbendruck (Buntdruck) oder Farbbilder hergestellt werden.

In der US-A 2,691,696 sind verschiedene Ausführungsformen solcher Geräte gezeigt. Um die Bildschärfe zu verbessern, wird bei diesem Patent mit der sogenannten "Unscharfmaskierung" gearbeitet, wobei eine scharfe und eine unscharfe Abtastung des Bildes vorgenommen und die dabei gewonnenen Bildsignale elektronisch zu einem Aufzeichnungsignal vereinigt werden.

Bei einem in der US-A 2,691,696 beschriebenen Beispiel wird auf der Abtastseite zur Kontrastanhebung (Unsharp-Masking) mit zwei Lichtquellen gearbeitet, wobei die eine Lichtquelle für die Scharfabtastung (Sharp Channel) und die zweite Lichtquelle für die Unscharfabtastung (Unsharp Channel) vorgesehen sind. Die Größe von scharfem Abtastfleck und unscharfem Abtastfleck wird jeweils durch die Apertur von zwei Blenden bestimmt, die jeweils innerhalb der entsprechenden Lichstrahlengänge angeordnet sind, bevor die Lichtstrahlen auf die Abtaststelle der Vorlage treffen. Die Signaltrennung von Scharf- und Unscharfsignal wird entweder durch getrennte optoelektronische Wandler oder mechanisch vorgenommen (Light Shopper).

Bei einem anderen Beispiel der US-A 2,691,696 (Fig. 15) wird auf der Abtastseite mit nur einem Lichtstrahl und nur einem optoelektronischen Wandler gearbeitet. Bevor das Licht auf die Abtastvorlage auftritt, wird die Lichtquelle mittels zweier Optiken auf zwei in Abstand voneinander angeordnete dynamisch arbeitende Lichtventile abgebildet. Diese Lichtventile sind elektrisch steuerbar und erzeugen einen variablen Lichtspalt, dessen Breite vom elektrischen Steuersignal abhängt. Die Lichtventile, die jeweils in den Brennpunkten der Optiken angeordnet sind, liegen im rechten Winkel zueinander und ergeben durch ihr Zusammenwirken eine quadratische oder rechteckige Apertur, die mittels einer dritten Optik auf die Abtaststelle der Vorlage abgebildet wird. Das von der Vorlage durchgelassene Licht gelangt auf einen optoelektronischen Wandler, dessen Ausgangssignal in einem bestimmten Takt alternierend auf zwei Signalkanäle geschaltet wird. Mit diesem Schalttakt werden ebenfalls die beiden Lichtventile derart gesteuert, daß die Spaltbreiten jeweils alternierend zwei Werte annehmen, nämlich schmal oder breit. Stehen beide Lichtventile auf "schmal", so gibt der Wandler ein elektrisches Signal für die Scharfabtastung ab (Sharp Channel), stehen beide Lichtventile auf "breit", so wird am Wandler das Signal für die Unscharfabtastung (Unsharp Channel) abgegriffen.

Mit einer solchen Anordnung kann zwar zeitlich nacheinander abwechselnd ein Scharf- bzw. Unscharfsignal gewonnen werden, aber die Lichtventile sind relativ langsam, was zu einer geringen Abtastfrequenz führt.

Da es aber bei solchen Scannern auf hohe Abtastgeschwindigkeiten ankommt, ist es erforderlich, daß sowohl das Scharfsignal als auch das Unscharfsignal ständig ohne Unterbrechung anliegen, weshalb sich in der Praxis diese Abtasteinheiten mit zeitlich unterbrochenen Abtastsignalen niedriger Frequenz nicht durchgesetzt haben.

Es sind daher Abtastanordnungen mit Blendenanordnungen zum Einsatz gekommen, die mit hoher Abtastfrequenz arbeiten und bei denen die Abtastsignale ohne Unterbrechung geliefert werden. Solche Blendenanordnungen, die sowohl für die Unscharfmaskierung als auch für die Abtastung bereits gerasterter Vorlagen eingesetzt werden, besitzen eine erste Blende, auch Hauptblende genannt, die innerhalb des von der Vorlage reflektierten oder durchgelassenen Abtastlichtstrahls angeordnet ist. Die Öffnung dieser Blende läßt einen zentralen Bereich des Abtastlichtstrahls durch (Hauptfeld), der auf einen ersten optoelektronischen Wandler gegeben wird, der das eigentliche Abtastbildsignal im Abtastfleck liefert.

Weiterhin ist eine zweite Blende mit größerer Blendenöffnung als die Hauptblende (auch Umfeldblende genannt) vorgesehen, die in Verbindung mit einem teildurchlässigen Spiegel einen Teilstrahl aus dem Abtastlichtstrahl ausblendet. Durch diese Blende wird ein dem scharfen Abtastfleck umgebender größerer Bereich der Vorlage, dessen Größe durch die Apertur dieser Umfeldblende bestimmt ist, ausgeblendet und auf einen zweiten optoelektronischen Wandler gegeben, der das sogenannte Umfeldsignal liefert.

In der DE-A 30 10 880 ist eine solche Blendenanordnung gezeigt, bei der die dem Abtastlichtstrahl zugewandte Seite der Hauptblende im Bereich der Blendenöffnung eine Verspiegelung aufweist, durch die ein Teil des Abtastlichtstrahls (Umfeld) ausgespiegelt wird, der über die Umfeldblende auf den zweiten fotoelektrischen Wandler gegeben wird, Das Umfeldsignal wird zusammen mit dem Hauptsignal elektronisch weiterverarbeitet, was z. B. in der DE-A 10 39 842 beschrieben ist.

Der Vorteil dieser Blendenanordnung zur Vorlagenabtastung liegt darin, daß gegenüber der US-A 2,691,696 die Abtastsignale von Haupt- und Umfeld ständig parallel angeliefert werden, was eine schnelle Abtastung und Signalverarbeitung erlaubt. Außerdem ist eine exakte Trennung von Hauptfeldsignal und Umfeldsignal gegeben, was bei der US-A 2,691,696 nicht der Fall ist. Bei dem US-Patent entspricht das Signal des Scharfkanals dem Hauptfeldsignal der DE-A 30 10 880, das Signal des Unscharfkanals aber nicht dem Umfeldsignal, sondern das Unscharfsignal enthält auch die Modulation des scharfen Hauptbildpunktes, da die Blende im Unscharfkanal nur einen größeren Fleck abtastet als die Blende im Scharfkanal.

Das Umfeldsignal, das von der reflektierenden Blende gemäß DE-A 30 10 880 geliefert wird, enthält nur die Signalanteile des den scharfen Bildpunkt umgebenden Umfeldes.

Da bei solchen Scannern nicht nur die Unscharfmaskierung oder bei der Abtastung gerasterter Vorlagen eine Entrasterung mittels der Blendenanordnung vorgenommen werden soll, sondern in der Regel auch die Forderung nach Veränderung des Reproduktionsmaßstabes zwischen Vorlage und Aufzeichnung besteht, ist es erforderlich, die Abtastung je nach Maßstab mit unterschiedlicher Abtastfeinheit vorzunehmen, wozu je nach gewählter Abtastfeinheit die Größe des Abtastflecks, d. h. des Durchmessers der Hauptblende und auch die äußere Begrenzung des Umfeldes durch die Apertur der Umfeldblende an diese Abtastfeinheit angepaßt werden müssen.

Prinzipiell wäre es möglich, diese Anpassung mit den Lichtventilen der US-A 2,691,696 vorzunehmen, aber man müßte, wie bereits erwähnt, eine geringe Abtastfrequenz, d. h. langsame Abtastung in Kauf nehmen. Andernfalls würde man keine saubere Signaltrennung zwischen Abtastfleck und dem Signal, das sich aus dem den Abtastfleck umgebenden Umfeld ergibt, erhalten.

Außerdem ist der Einsatz solcher Lichtventile gemäß US-A 2,691,696 bei einer Anordnung gemäß DE-A 30 10 880 nicht möglich, da ein solches Lichtventil nur in einer Dimension eine unterschiedliche Einstellung eines Lichtspalts ermöglich und zwei solcher Lichtventile räumlich nicht an einem Ort angeordnet werden können. Es wird in diesem Zusammenhang auf die US-A 3,646,262 verwiesen, bei der in den Figuren 10 bis 12 ein solches Lichtventil dargestellt ist.

Ein weiterer Nachteil solcher Lichtventile besteht darin, daß es mit solchen Lichtventilen nicht möglich ist, das Umfeld separat auszublenden.

Es sind weiterhin verstellbare Blenden, z. B. Irisblenden bekannt, die aus mehreren Lamellen bestehen, die zur Verstellung der Blende entsprechend verdreht bzw. verschoben werden. Der Einsatz solcher Blenden bei einer Blendenanordnung gemäß DE-A 30 10 880 ist ebenfalls nicht möglich, da, selbst wenn man die Rückseite der Lamellen verspiegelt, sich kein ebener Spiegel herstellen läßt, mit dem eine exakte optische Abbildung möglich ist. Ein Grund liegt in der unterschiedlichen Dicke der Lamellen und darin, daß die Lamellenstärken zur Erhaltung der geforderten mechanischen Steifigkeit nicht beliebig verringert werden können. Auch verhindert die Biegsamkeit der Lamellen eine exakte optische Abbildung. Diese Blenden scheiden daher für den Einsatz als reflektierende Blenden aus.

Zur Anpassung der Blendendurchmesser an die unterschiedlichen Abtastfeinheiten verwendet man daher in der Praxis eine Vielzahl von einander zugeordneten Blenden unterschiedlicher Durchmesser, die z. B. in einem sogenannten Blendenrad angeordnet sind. Je nach gewählter Abtastfeinheit werden zwei unterschiedliche aufeinander abgestimmte Blenden in den Abtastlichtstrahl geschwenkt. Da es aber für jede Abtastfeinheit nur einen optimalen Hauptblendendurchmesser gibt, durch die die Größe des Abtastlichtpunktes bestimmt ist, ist einzusehen, daß auch bei einer Mehrzahl von Blenden nur für diese einzelnen Blenden eine optimale Abtastung erfolgen kann. Für Abtastfeinheiten, die zwischen diesen Blendendurchmessern liegen, ist eine Fehlanpassung der Blende gegeben, die zwar in Kauf genommen wird. Bei zu großer Blende (Überabtastung) tritt ein Kontrastverlust, und bei zu kleiner Blende (Unterabtastung) treten Abtastlücken auf. In beiden Fällen ist ein Informationsverlust, also ein Qualitätsverlust, unvermeidlich. Ein Gerät, das mit einem solchen Blendenrad versehen ist, ist z. B. in der Betriebsanleitung, Vario-Klischograph K 181, Ausgabe 3, Dezember 1963, der Dr.-Ing. Rudolf Hell GmbH, Kiel, beschrieben.

Um den beim Einsatz von Blendenrädern auftretenden Nachteilen entgegenzuwerken, ist in der EP-A-1 0 077 410 ein Verfahren zur Verbesserung der Kontrastanhebung bei veränderbarem Reproduktionsmaßstab angegeben, bei dem je nach gewähltem Maßstab eine gezielte Änderung der Übertragungsbreite von Korrektursignal (Umfeldsignal) und Bildsignal (Hauptfeldsignal) eingestellt wird. Hier wird zwar elektronisch versucht, eine Anpassung der Kontrastanhebung an die unterschiedliche Abtastauflösung vor zunehmen, aber eine optimale Blendenanpassung sowohl der Hauptblende als auch der Umfeldblende findet nicht statt, so daß auch hier Über- bzw. Unterabtastung stattfindet.

Wie hieraus zu ersehen ist, muß also bei Abtastfeinheiten, die nicht auf den jeweiligen Blendendurchmesser optimiert sind, grundsätzlich mit einem Qualitätsverlust gerechnet werden.

Im Falle, daß gerasterte Vorlagen abgetastet werden, tritt neben einem Qualitätsverlust noch ein Restmoiré auf, da die Ausfilterung der Rasterfrequenz des Rasters der gerasterten Vorlage ebenfalls nur mit optimal an das Raster der Vorlage angepaßten Blendendurchmessern erfolgen kann, was z. B. aus EP-A-2 0 065 281 zu entnehmen ist.

Der vorliegenden Erfindung liegt daher die Aufgabe zugrunde, eine Blendenanordnung für die optoelektronische Vorlagenabtastung zu schaffen, bei der diese Nachteile vermieden werden sollen. Die Blendenanordnung soll sowohl an die jeweilige geforderte Abtastfeinheit angepaßt werden als auch bei der Abtastung gerasterter Vorlagen zu einer optimalen Entrasterung der Blende führen und dabei eine hohe Abtastgeschwindigkeit und eine saubere Signaltrennung von Haupt- und Umfeld liefern.

Die Erfindung erreicht dies durch die im Anspruch 1 angegebenen Merkmale.

Weitere vorteilhafte Ausbildungen der Erfindung sind in den Unteransprüchen 2 bis 7 angegeben. Die Erfindung wird im folgenden anhand der Figuren 1 bis 15 näher erläutert. Es zeigen:

Figur 1 eine verstellbare Blendenanordnung zur Abtastung von Haupt- und Umfeld,

Figur 2 eine Ausführungsform eines Elements einer verstellbaren Blende,

Figur 3 eine perspektivische Ansicht von zwei zusammenwirkenden Blendenelementen,

Figur 4 ein Beispiel für die Form der Apertur der Blende nach Figur 3,

Figur 5 ein weiteres Beispiel für die Form der Blendenapertur nach Verstellung der Blende,

Figur 6 ein weiteres Ausführungsbeispiel eines Blendenelementes,

Figur 7 ein Beispiel für die Form der Apertur bei Verwendung des Blendenelementes gemäß Figur 6,

Figur 8 ein Beispiel für die Anordnung zusätzlicher einstellbarer Streulichtblenden vor der einstellbaren Blende,

Figur 9 ein Beispiel für die Anordnung zusätzlicher einstellbarer Streulichtblenden nach der einstellbaren Blende,

Figur 10 eine perspektivische Ansicht einer Kombination von verstellbarer Blende mit verstellbaren Streulichtblenden,

Figur 11 ein weiteres Beispiel einer Blendenanordnung, bei der die Blende für das Umfeld eine Irisblende ist, die auf einer Achse mit der Blende des Hauptfeldes liegt,

Figur 12 ein weiteres Beispiel einer Blendenanordnung, bei der die Blende für das Umfeld eine Irisblende ist und auf der ausgeblendeten Achse für das Umfeld liegt,

Figur 13 eine Darstellung der Form des Umfeldes bei Verwendung einer Irisblende,

Figur 14 der Verlauf der Strahlintensität für das Umfeld gemäß Figur 14 längs eines Schnittes.

Figur 15 ein weiteres Beispiel einer Blendenanordnung, bei der gleichartige Blenden für das Hauptfeld und das Umfeld auf einer Achse liegen.

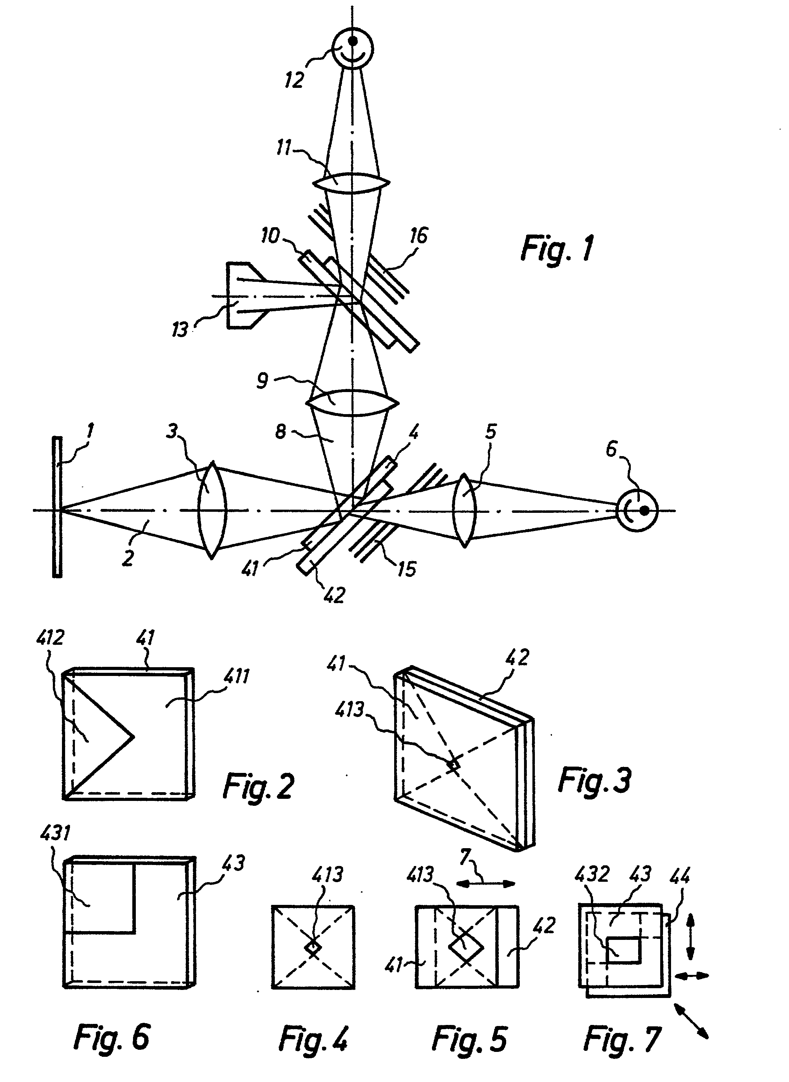

In Figur 1 ist eine Abtastanordnung für eine Vorlage 1 gezeigt, bei der ein Abtastlichtstrahl 2, der entweder ein von der Vorlage 1 durchgelassener Lichtstrahl oder ein von der Vorlage reflektierter Lichtstrahl sein kann, über eine schematisch dargestellte Optik 3, eine Blende 4 und eine weitere Optik 5 auf einen optoelektronischen Wandler 6 gegeben wird, Die Blende 4 besteht aus zwei planparallelen Glasplatten 41 und 42, die schräg im Abtastlichtstrahl 2 angeordnet sind.

Figur 2 zeigt eine solche Platte 41, die auf einer Seite mit einer reflektierenden Schicht 411 versehen ist, die die Platte 41 nur zu einem Teil bedeckt. Dadurch, daß die Platte nur zum Teil beschichtet ist, läßt sie in dem mit 412 bezeichneten Teil Licht durch. Fügt man zwei solcher Platten, die mit ihrer verspiegelten Schicht aneinander liegen, zusammen, so entsteht eine Blende mit einer symmetrischen Öffnung 413, wie in den Figuren 3 und 4 dargestellt ist. Verschiebt man die Platten 41 und 42 gemäß Figur 5 in Pfeilrichtung 7, so verändert sich die Größe der Blendenöffnung.

Um ein besseres optisches Verhalten der Blenden zu er halten, werden die nicht beschichteten Flächen in vorteilhafter Weise durch Aufbringen einer dielektrischen Schicht entspiegelt. Die Beschichtung der Glasplatten erfolgt durch metallische Bedampfung mit Schichtdicken im Bereich um 0,1 μm. Der Abstand der Glasplatten beträgt etwa 5 μm und kann noch verringert werden, wenn die Platten optisch poliert werden. Eine solche Blendenanordnung liefert exakte optische Abbildungen, da die Schichtdicke der Beschichtung vernachlässigbar ist.

Die die Öffnung 413 umgebende reflektierende Schicht 411 reflektiert einen Teilstrahl 8, der über eine weitere Optik 9 auf eine Blende 10 gegeben wird, die ebenso wie die Blende 4 aufgebaut sein kann. Das durch die Blende 10 durchgelassene Licht gelangt über eine weitere Optik 11 auf einen optoelektronischen Wandler 12. Die Blenden 4 und 10 werden so eingestellt, daß die Blende 4 den Durchmesser des Hauptstrahls und die Blende 10 den Durchmesser des Umfeldstrahls begrenzen. Das von der Blende 10 nicht durchgelassene Licht wird reflektiert und in einen Lichtsumpf 13 abgeleitet.

Figur 6 zeigt eine weitere Ausführungsform für eine beschichtete Glasplatte 43, und Figur 7 zeigt eine Anordnung von zwei solcher Glasplatten 43 und 44, die ebenfalls eine verstellbare Blende ergeben. Durch Verschiebung der einzelnen Glasplatten in diagonaler Richtung bildet sich ebenfalls eine symmetrische Blendenöffnung 432.

Durch diese Blendenanordnung gemäß der Figuren 2 und 7 lassen sich gleichbleibende Blendenformen wie symmetrische Vierecke, Rauten, Quadrate und Rechtecke, mit beliebigem Kantenverhältnis realisieren. Die mechanische Relativbewegung wird so definiert bemessen, daß der Mittelpunkt der Blendenöffnung sich immer an derselben Stelle befindet. Dies wird dadurch erreicht, daß z. B. Hebelsysteme mit Spindel- oder Sinusantrieb eingesetzt werden oder die Bewegung eines Endlosbandes ausgenutzt wird.

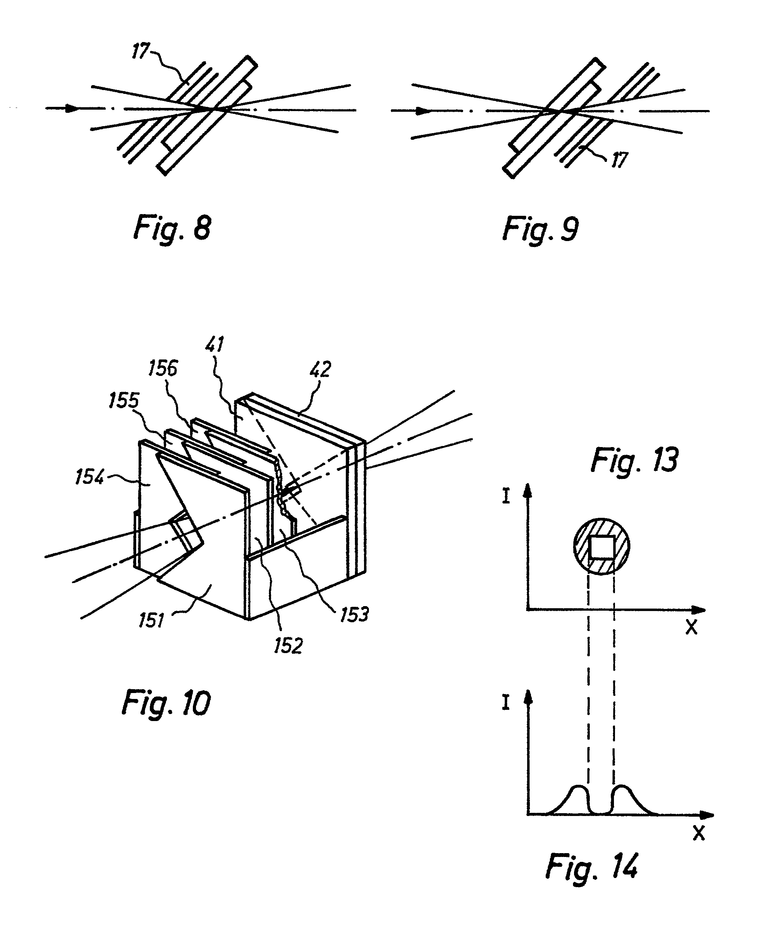

Eine weitere Verbesserung des Abtastsystems gemäß Figur 1 kann in vorteilhafter Weise in einer zusätzlichen Streulichtausblendung bestehen. Hierdurch sollen die Kontrastverhältnisse bei der Antastung verbessert werden. Dieses Ziel wird erreicht, indem man sog. Strahlfallen als Streulichtblenden verwendet, die an die jeweilige Apertur des Lichtstrahls angepaßt sind. In Figur 1 können hierzu z. B. hinter der Blende 4 und auch der Blende 10 Strahlfallen 15 und 16 vorgesehen sein, die im einzelnen in den Figuren 8 und 9 dargestellt sind. In vorteilhafter Weise bestehen sie aus schwarz mattierten Lamellen 17, die starr mit den Blendenelementen verbunden sind und mit den Blendenelementen mitbewegt werden können. Die Streulichtblenden können allerdings auch vor den Blenden im Strahlengang angeordnet sein, dies hängt davon ab, wo innerhalb des Systems entsprechender Platz für diese Blenden vorhanden ist.

Die Figur 10 zeigt eine perspektivische Ansicht einer solchen Strahlfalle in Verbindung mit einer verstellbaren Blende gemäß Fig. 3.

An dem Blendenelement 41 sind einzelne Lamellen 151, 152 und 153 befestigt, die mit auf dem Blendenelement 42 angeordneten Lamellen 154, 155 und 156 zusammenwirken. Die Ausschnitte der einzelnen Lamellen sind so bemessen, daß sie dem jeweiligen Strahldurchmesser angepaßt sind.

Soll der reflektierte Teilstrahl für eine Unscharfmaskierung bei der Vorlagenabtastung verwendet werden, so empfiehlt es sich, die Anordnung der Streulichtblenden hinter der Blende 10 vorzusehen, wie dies in Figur 1 dargestellt ist.

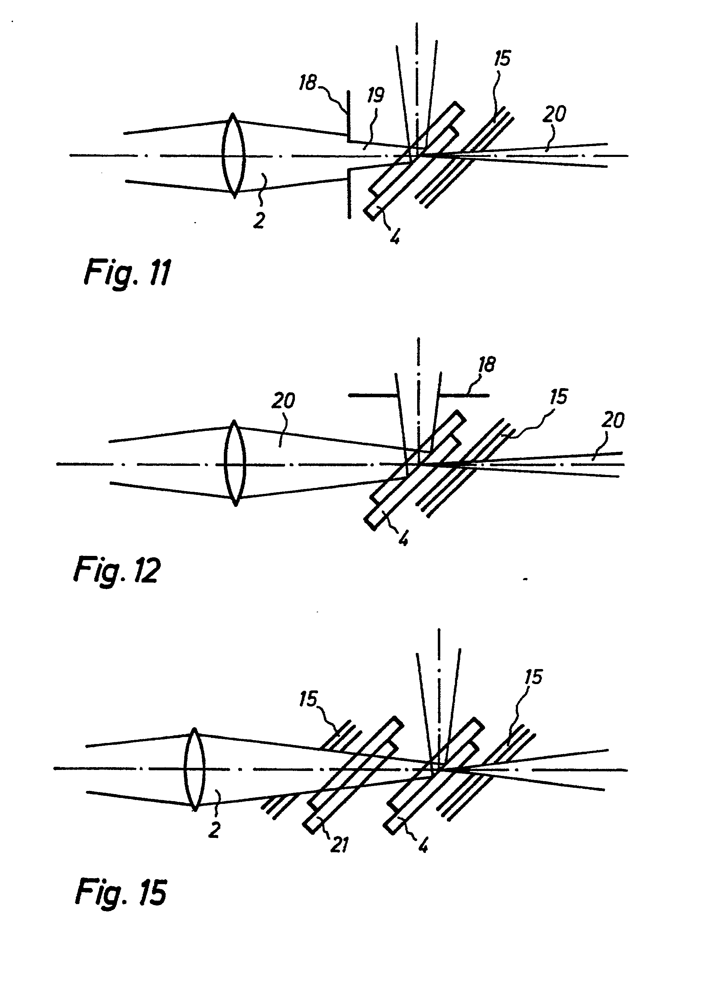

Eine weitere Ausführungsform der Erfindung ist in Figur 11 dargestellt. Hierbei wird der Abtaststrahl 2 durch eine verstellbare Irisblende 18 begrenzt. Der begrenzte Lichtstrahl 19 trifft auf die einstellbare Hauptblende 4, die nur einen Teilstrahl 20 hindurchläßt, während das restliche Licht von der Verspiegelung der Blende reflektiert wird.

Die Irisblende 18 läßt sich auch in dem von der Hauptblende 4 reflektierten Teilstrahl anordnen, was in Figur 12 gezeigt ist. Sind die Kontrastanforderungen nicht zu hoch, so kann bei der in Figur 11 gezeigten Anordnung die Irisblende 18 ebenfalls die Funktion der Streulichtblende übernehmen, und die Lamellenblende 15 der Figur 11 kann entfallen. Eine besondere Eigenschaft dieser Anordnungen gemäß Figuren 11 und 12 ist, daß die Begrenzung des Umfeldstrahls unscharf ist, was in den Figuren 13 und 14 dargestellt ist. Figur 13 zeigt die Form des ausgeblendeten Umfeldes und Figur 14 den Intensitätsverlauf I über dem Durchmesser der Blende in Richtung x der Fig. 13.

Figur 15 zeigt eine weitere Ausführungsform der Erfindung, bei der anstelle der Irisblende eine zweite verstellbare Blende 21 eingesetzt ist. Um den Abstand der Blenden 21 und 4 nicht zu groß werden zu lassen, werden die Blenden so gedreht, daß die Streulichtblenden 15 einmal vor und einmal hinter der Blende zu liegen kommen. Wie in Figur 12 ist auch hier eine Anordnung der Umfeldblende im reflektierten Strahl möglich.

Bei den in den Beispielen der Fig. 1, 11, 12 und 15 beschriebenen Blendenanordnungen wird die Strahlteilung mittels der Verspiegelung der Blende vorgenommen.

Eine weitere vorteilhafte Blendenanordnung ist gegeben, wenn die Strahlteilung mittels eines Teilerwürfels vorgenommen wird. In diesem Fall ist es nicht erforderlich, daß die Beschichtung der Blendenkörper reflektierend ausgebildet ist, da der Teilerwürfel den Strahl ausblendet. Auf eine Darstellung eines solchen Teilerwürfels wird verzichtet, da diese als optische Bauelemente allgemein bekannt sind.

Bei Einsatz der erfindungsgemäßen Blendenanordnung für die Umscharfmaskierung, bei der ein Teilstrahl vom Abtastlicht ausgeblendet wird, kann je nachdem, wie stark dieser Effekt sein soll, die Größe der Umfeldblende gewählt werden. Sie kann zwischen 1,3 bis 5 oder auch in einzelnen Fällen bis zu 20 mal größer sein als die Hauptblende. Eine besondere Anforderung an Größe und Form der Abtastblende ist in dem Fall gegeben, in dem gerasterte Vorlagen abgetastet werden sollen. Hierbei ist es erforderlich, daß die Form der Blende und die Auswinkelung der Blendenöffnung dem abgetasteten Raster angepaßt sind. Es wird hierzu auf EP-A-2 0 065 281 verwiesen. Da bei der Abtastung gerasterter Vorlagen die abgetasteten Vorlagen häufig sehr unterschiedliche Rasterweiten haben und auch die Rasterwinkel in den einzelnen Farbauszügen unterschiedlich sind, ist eine Blendenanordnung gemäß der vorliegenden Erfindung besonders geeignet, diese Anpassungen vorzunehmen. Die Hauptblende wird durch Drehung um die optische Achse mit ihren Kanten auf den Rasterwinkel eingestellt und die Blendengröße auf die Größe der Rastermasche. Größe und Richtung der Umfeldblende werden ebenfalls optimiert.

**Patentansprüche**

1. Blendenanordnung zur punktweisen optoelektronischen Abtastung von Vorlagen, wobei sich der Abtastpunkt aus einem zentralen Hauptfeld und einem das Hauptfeld umgebenden Umfeld zusammensetzt, mit einer ersten Blende zur Abtastung des Hauptfeldes, die innerhalb eines von der Vorlage reflektierten oder durchgelassenen Abtastlichtstrahls angeordnet ist und die auf der dem Abtastlichtstrahl zugewandten Seite im Bereich um die Blendenöffnung eine Verspiegelung aufweist, die einen Teil des Abtastlichtstrahls reflektiert und mit einer zweiten Blende zur Abtastung des Umfeldes, die innerhalb des von der ersten Blende reflektierten Teils des Abtastlichtstrahls angeordnet ist, so daß die Blendenöffnung der ersten Blende die Größe des Hauptfeldes und damit die Abtastfeinheit und den Innendurchmesser des Umfeldes bestimmt und die Blendenöffnung der zweiten Blende die Größe des Umfeldes bestimmt, dadurch gekennzeichnet, daß die Größe der Blendenöffnungen der beiden Blenden unabhängig voneinander kontinuierlich einstellbar sind und wobei durch diese unabhängige Verstellung der beiden Blendenöffnungen das Größenverhältnis vom Haupt- und Umfeld kontinuierlich einstellbar ist.

2. Blendenanordnung nach Anspruch 1, dadurch gekennzeichnet, daß die Blenden jeweils aus zwei verspiegelten Blendenelementen bestehen, die symmetrische Ausnehmungen der Verspiegelung aufweisen und die so angeordnet sind, daß die Ausnehmungen sich zu der Blendenöffnung ergänzen.

3. Blendenanordnung nach Anspruch 2, dadurch gekennzeichnet daß die Verstellung der Blendenöffnung durch symmetrische Verschiebung der Blendenelemente erfolgt.

4. Blendenanordnung nach einem der Ansprüche 1 - 3, dadurch gekennzeichnet, daß die Blenden jeweils aus zwei aufeinander liegenden Platten aus Glas oder dergleichen bestehen, die jeweils eine verspiegelte Oberfläche aufweisen, daß die Platten mit ihrer verspiegelten Oberfläche aufeinander liegen und daß innerhalb der Verspiegelung der Platten symmetrische, nichtverspiegelte Flächen ausgespart sind, derart, daß sich bei planparalleler Verschiebung der beiden Platten entlang mindestens einer der Symmetrieachsen der nichtverspiegelten Flächen kontinuerlich veränderbare Blendenöffnungen durch diese nichtverspiegelten Flächen ergeben.

5. Blendenanordnung nach einem der Ansprüche 1 - 4, dadurch gekennzeichnet, daß die Verspiegelung der Blendenelemente eine metallische Bedampfung ist.

6. Blendenanordnung nach Anspruch 4, dadurch gekennzeichnet, daß die Glasplatten optisch poliert sind.

7. Blendenanordnung nach Anspruch 4, dadurch gekennzeichnet, daß die nichtverspiegelten Teile der Glasplatten entspiegelt sind.

8. Blendenöffnung nach einem der Ansprüche 1 - 7, dadurch gekennzeichnet, daß zur symmetrischen Verschiebung der Blendenelemente eine Relativbewegung in Form einer gegenläufigen Translationsbewegung erzeugt wird, derart, daß der Mittelpunkt der Blendenöffnung erhalten bleibt.

9. Blendenanordnung nach einem der Ansprüche 1 - 8, dadurch gekennzeichnet, daß zur Unterdrückung von Streulicht zusätzliche Blenden vor oder hinter den verstellbaren Blenden angeordnet sind, deren Öffnungen jeweils an die Appertur des Strahlenbündels am Ort der Zusatzblende angepaßt sind.

10. Blendenanordnung nach Anspruch 9, dadurch gekennzeichnet, daß die zusätzlichen Blenden aus schwarzmattierten Lamellen bestehen, die starr mit den Blendenelementen verbunden sind, und daß diese Lamellen zusammen mit den Blendenelementen verschiebbar sind.

11. Blendenanordnung nach einem der Ansprüche 1 - 4, dadurch gekennzeichnet, daß die Blendenöffnungen symmetrische Vierecke, Rauten, Quadrate oder Rechtecke mit beliebigem Kantenverhältnis sind.

12. Blendenanordnung nach Anspruch 1, dadurch gekennzeichnet, daß die zweite Blende eine Irisblende ist.

**Revendications**

1. Disposition de diaphragmes pour la détection optoélectronique ponctuelle de modèles, le point de détection se composant d'un champ principal central et d'un champ périphérique entourant le champ principal, disposition comportant un premier diaphragme pour détecter le champ principal à l'intérieur d'un faisceau de lumière de détection réfléchi par le document ou ayant traversé celui-ci et qui comporte une surface de miroir du côté tourné vers le faisceau de lumière de détection, dans la zone entourant l'ouverture du diaphragme, pour réfléchir une partie du faisceau de lumière de détection, ainsi qu'un second diaphragme pour détecter le champ périphérique à l'intérieur de la partie du faisceau de lumière de détection réfléchi par le premier diaphragme de manière que l'ouverture du premier diaphragme détermine la dimension du champ principal et ainsi la finesse de détection (résolution) ainsi que le diamètre intérieur du champ périphérique et que l'ouverture du second diaphragme détermine la dimension du champ périphérique, disposition caractérisée en ce que la dimension des ouvertures des deux diaphragmes sont réglables indépendamment l'une de l'autre et en continu, ce réglage indépendant des deux ouvertures de diaphragmes réglant en continu le rapport des dimensions du champ principal et du champ périphérique.

2. Disposition de diaphragmes selon la revendication 1, caractérisée en ce que les diaphragmes sont constitués chacun de deux éléments de diaphragmes munis d'une surface réfléchissants qui ont des évidements symétriques non réfléchissants, ces deux diaphragmes étant disposés de manière que les évidements non réfléchissants se complètent pour former l'ouverture du diaphragme.

3. Disposition de diaphragmes selon la revendication 2, caractérisée en ce que le réglage de l'ouverture du diaphragme se fait par le coulissement symétrique des éléments de diaphragmes.

4. Disposition de diaphragmes selon l'une des revendications 1 à 3, caractérisée en ce que les diaphragmes se composent chaque fois de deux plaques en verre ou analogue placées l'une sur l'autre et ayant chacune une surface réfléchissante, les plaques étant disposées l'une sur l'autre du côté de leur surface réfléchissante et en ce qu'à l'intérieur de la partie réfléchissante des plaques on a réalisé des surfaces non réfléchissantes, symétriques pour que par coulissement sur un plan parallèle des deux plaques le long d'au moins l'un des axes de symétrie des surfaces non réfléchissantes on obtienne des ouvertures de diaphragmes variables en continu par les surfaces non réfléchissantes.

5. Disposition de diaphragmes selon l'une des revendications 1 à 4, caractérisée en ce que l'état réfléchissant des éléments de diaphragmes est réalisé par une vaporisation d'un métal.

6. Disposition de diaphragmes selon la revendication 4, caractérisée en ce que les plaques de verre présentent un poli optique.

7. Disposition de diaphragmes selon la revendication 4, caractérisée en ce que les parties non réfléchissantes des plaques de verre sont rendues non réfléchissantes.

8. Disposition d'ouverture de diaphragme selon l'une des revendications 1 à 7, caractérisée en ce que pour coulisser symétriquement les éléments de diaphragmes on crée un mouvement relatif sous la forme d'un mouvement de translation contraire pour que le centre de l'ouverture de diaphragme reste fixe.

9. Disposition de diaphragmes selon l'une des revendications 1 à 8, caractérisée en ce que pour supprimer la lumière parasite on dispose des diaphragmes supplémentaires en amont ou en aval des diaphragmes réglables, diaphragmes supplémentaires dont les ouvertures sont respectivement adaptées à l'ouverture du faisceau de rayon à l'emplacement où se trouve le diaphragme supplémentaire.

10. Disposition de diaphragmes selon la revendication 9, caractérisée en ce que les diaphragmes supplémentaires sont formés de lamelles noires mates reliées solidairement aux éléments de diaphragmes et ces lamelles coulissent avec les éléments de diaphragmes.

11. Disposition de diaphragmes selon l'une des revendications 1 à 4, caractérisée en ce que les ouvertures de diaphragmes sont des quadrants symétriques, des losanges, des carrés ou des rectangles ayant un rapport d'arête quelconque.

12. Disposition de diaphragmes selon la revendication 1, caractérisée en ce que le second diaphragme est un diaphragme à iris.

**Claims**

1. A diaphragm system for the dotwise optoelectronic scanning of originals, wherein the scanning dot combines a principal central field and a peripheral field surrounding the principal field, with a first aperture for scanning the principal field, which is situated within a scanning beam reflected or transmitted by the original and which is provided, on the side facing towards the scanning beam in the area around the diaphragm aperture, with a reflective coating which reflects a part of the scanning beam and with a second diaphragm for scanning the outer field, which is situated within the part of the scanning beam reflected by the first diaphragm, so that the diaphragm aperture of the first diaphragm determines the magnitude of the principal field and hence the scanning resolution and the internal diameter of the peripheral field and the diaphragm aperture of the second diaphragm determines the magnitude of the outer field, characterized in that the sizes of the diaphragm apertures of the two diaphragms are continuously adjustable independently one from another, the magnitude ratio between the principal and peripheral fields being continuously adjustable by means of this independent adjustment of the two diaphragm apertures.

2. A diaphragm system according to claim 1, characterized in that the diaphragms each comprise two reflectively coated diaphragm elements which have symmetrical excisions of the reflective coating and which are so arranged that the excisions complement one another to form the diaphragm aperture.

3. A diaphragm system according to claim 2, characterized in that the adjustment of the diaphragm aperture is effected by symmetrical shifting of the diaphragm elements.

4. A diaphragm system according to one of claims 1 to 3, characterized in that the diaphragms each comprise two panes of glass or the like, overlying one another, each of which has one reflectively coated surface, that the plates overlie one another with their reflectively coated surfaces and that symmetrical uncoated areas are cut out within the reflective coating of the panes in such a way that continually variable diaphragm apertures are produced by these uncoated areas upon plane-parallel displacement of the two panes along at least one of the axes of symmetry of the uncoated areas.

5. A diaphragm system according to one of claims 1 to 4, characterized in that the reflective coating of the diaphragm elements is a metallic vapour deposit.

6. A diaphragm system according to claim 4, characterized in that the glass panes are optically polished.

7. A diaphragm system according to claim 4, characterized in that the uncoated parts of the glass panes are stripped of reflective coating.

8. A system for the diaphragm aperture according to one of claim 1 to 7, characterized in that for the symmetrical displacement of the diaphragm elements a relative motion in the form of a reciprocal translatory movement is produced in such a way that the centre of the diaphragm aperture is retained.

9. A diaphragm system according to one of claims 1 to 8, characterized in that for the suppression of scattered light, additional diaphragms are arranged in front of or behind the displaceable diaphragms the openings of which are each matched to the aperture of the beam at the position of the additional diaphragm.

10. A diaphragm system according to claim 9, characterized in that the additional diaphragms consist of matt black plates which are rigidly coupled to the diaphragm elements and that these plates are displaceable together with the diaphragm elements.

11. A diaphragm system according to one of claims 1 to 4, characterized in that the diaphragm apertures are symmetrical quadrilaterals, rhombuses, squares or rectangles with side ratios as desired.

12. A diaphragm system according to claim 1, characterized in that the second diaphragm is an iris diaphragm.

EP 0 276 337 B1

Fig. 1

Fig. 2

Fig. 3

Fig. 6

Fig. 4

Fig. 5

Fig. 7

*17*

*Fig. 8*

*17*

*Fig. 9*

*41*
*156*
*42*
*155*
*154*
*151*
*152*
*153*

*Fig. 10*

*Fig. 13*

I

X

I

X

*Fig. 14*

**Fig. 11**

**Fig. 12**

**Fig. 15**